# FASCICULE DE BREVET EUROPEEN

(11) **EP 3 440 452 B1**
(45) Date de publication et mention de la délivrance du brevet: **02.08.2023**
(21) Numéro de dépôt: 17714822.8
(22) Date de dépôt: 05.04.2017
(51) Int. Cl.: G01N 21/88, G01N 21/47

(54) **PROCÉDÉ DE DÉTECTION D'UN DÉFAUT SUR UNE SURFACE PAR ÉCLAIRAGE MULTIDIRECTIONNEL ET DISPOSITIF ASSOCIÉ**
VERFAHREN ZUR ERKENNUNG EINES DEFEKTS AUF EINER OBERFLÄCHE DURCH MULTIDIREKTIONALE BELEUCHTUNG UND ZUGEHÖRIGE VORRICHTUNG
METHOD FOR DETECTING A DEFECT ON A SURFACE BY MULTIDIRECTIONAL LIGHTING AND ASSOCIATED DEVICE

(30) Priorité: 05.04.2016 FR 1652980
(43) Date de publication de la demande: 13.02.2019
(73) Titulaire: FRAMATOME, 92400 Courbevoie (FR)
(72) Inventeur: TAGLIONE, Matthieu, 71370 SAINT ETIENNE EN BRESSE (FR); SKOPINSKI, Clément, 71100 CHALON SUR SAONE (FR); CAPUT, Gautier, 73000 Chambéry (FR)
(74) Mandataire: Lavoix
(86) Numéro de dépôt international: PCT/EP2017/058162
(87) Numéro de publication internationale: WO 2017/174683

(56) Documents cités:
- WO-A1-2006/038196
- FR-A1- 2 858 412
- US-A- 5 313 542
- US-A1- 2002 196 338
- US-A1- 2005 180 160
- US-A1- 2009 079 987
- US-A1- 2015 153 276
- US-A1- 2015 355 103
- US-B2- 8 103 491

## Description

La présente invention concerne un procédé de détection d'un défaut sur une surface.

Un procédé actuel consiste à acquérir une image ou un film de la surface. Cette image ou ce film sont ensuite visionnés par un opérateur qui indique les défauts qu'il a repérés.

Cependant, l'opérateur est susceptible de ne pas repérer un défaut par manque d'attention. De plus, les critères permettant de juger d'un défaut sont subjectifs, c'est-à-dire que la définition de ce qu'est un défaut est susceptible de varier selon l'opérateur.

Une solution qui est souvent mise en oeuvre pour pallier ces problèmes est la visualisation du film ou de l'image par plusieurs opérateurs. De plus, des exemples d'image de surface sont utilisés afin de montrer ce qui est un défaut ou non.

Cependant, les exemples représentés ne sont ni exhaustifs ni reproductibles.

Dans l'éventualité d'un défaut, des experts sont consultés. De nombreux allers-retours entre experts sont alors réalisés, les experts n'étant pas nécessairement d'accord entre eux.

L'analyse d'une surface est susceptible d'être longue et complexe. Le document US 2015/0355103 A1 décrit un procédé de détection d'un défaut sur une surface. Le document US 2009/0079987 A1 décrit un procédé de mesure de la distribution de la réflexion sur une surface.

L'invention a notamment pour but de remédier à cet inconvénient en fournissant un procédé simple et sûr afin de détecter un défaut sur une surface.

À cet effet, l'invention a notamment pour objet un procédé de détection d'un défaut sur une surface selon la revendication 1.

Le procédé de détection selon l'invention peut comporter en outre l'une ou plusieurs des caractéristiques des revendications 2 à 11, prises seules ou selon toutes les combinaisons techniquement possibles.

L'invention sera mieux comprise à la lecture de la description qui va suivre, donnée uniquement à titre d'exemple et faite en se référant aux figures annexées parmi lesquelles :
- la figure 1 est une vue schématique d'un exemple de dispositif utilisé dans le procédé de détection de l'invention,
- la figure 2 est un schéma d'étapes d'un mode de réalisation du procédé de l'invention,
- la figure 3 est un exemple d'image de la surface sur laquelle est appliqué le procédé de détection,
- la figure 4 est un exemple de l'évolution de trois paramètres sur une ligne de la surface de la figure 3,
- la figure 5 est un exemple de détection de défauts sur la surface de la figure 3, et
- la figure 6 est un exemple de paramètres en un point présentant un défaut et en un point ne présentant pas de défaut.

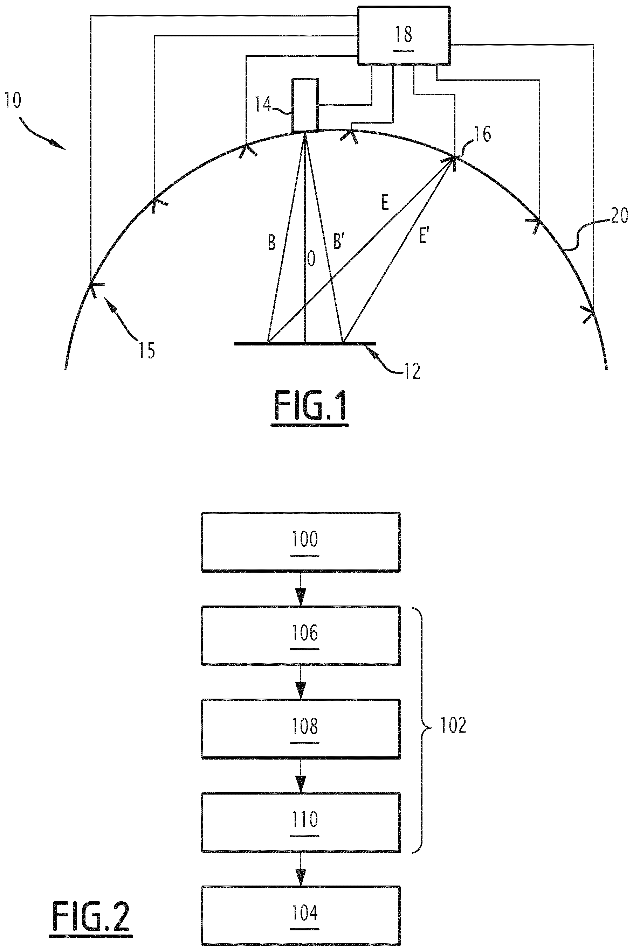

Un exemple de dispositif de détection 10 d'un défaut dans une surface 12 est représenté à la figure 1.

Le dispositif de détection 10 comprend un dispositif optique 14, un dispositif d'éclairage 15 comprenant un premier nombre de source(s) de lumière 16 et un dispositif électronique de calcul 18.

Le dispositif optique 14 a un axe optique aligné avec une direction optique O donnée. Il possède un champ d'acquisition.

Le dispositif optique 14 est apte à acquérir une image de la surface 12 selon la direction optique O donnée. Le champ d'acquisition coïncide avec la surface 12 à inspecter, de sorte que l'image acquise représente la surface 12.

Pour chaque point de la surface, on définit une direction d'observation B, B' entre le dispositif optique 14 et le point de la surface 12.

Le champ d'acquisition est ici fixe.

La direction optique O est typiquement sensiblement perpendiculaire à la surface 12. En variante, la direction optique O n'est pas perpendiculaire à la surface 12.

Le dispositif optique 14 est, par exemple, une caméra.

Alternativement, le champ d'acquisition coïncide uniquement avec une partie de la surface 12 et est apte à se déplacer par rapport à la surface 12 de sorte à pouvoir acquérir l'ensemble de la surface 12 en plusieurs parties.

Chaque image acquise est constituée d'une matrice de pixels de dimension i*j, avec i le nombre de lignes horizontales et j le nombre de lignes verticales de la matrice, avec au moins un des deux paramètres (i,j) supérieur à 1. Le pixel est, par exemple, un rectangle de taille notée h*L, avec h sa hauteur et L sa largeur. La hauteur h est égale à la largeur L. En variante, la hauteur est différente de la largeur
On appelle par la suite indifféremment par « point de la surface » un pixel d'une image acquise ou une partie de la surface acquise en un pixel.

Les sources de lumière 16 sont aptes à éclairer la surface 12.

Pour chaque point de la surface, les sources de lumière 16 ont chacune une direction d'éclairage E, E' donnée reliant la source de lumière au point de la surface 12. La direction d'éclairage est différente pour chaque source de lumière.

Les sources de lumière 16 sont typiquement disposées selon une demi-sphère 20 entourant la surface 12.

Le premier nombre est, par exemple, supérieur à six, plus particulièrement supérieur à vingt. Le premier nombre est, par exemple compris entre 32 et 128, plus particulièrement égal à 96.

Les sources de lumière 16 sont, par exemple, des diodes électroluminescentes (DEL).

Elles peuvent être éteintes ou allumées. Elles sont configurées pour pouvoir être allumées indépendamment les unes des autres.

Les sources de lumière 16 ont typiquement une intensité lumineuse identique.

En variante, le dispositif d'éclairage 15 comprend une ou plusieurs sources de lumière étant apte(s) à se déplacer, par exemple sur la demi-sphère 20, en un premier nombre de positions par rapport à la surface.

En variante, le dispositif d'éclairage 15 comprend un ou plusieurs éclairages éventuellement non identiques. Lorsque le dispositif d'éclairage est entièrement allumé, cela réalise, par exemple, un éclairage non-homogène sur la surface acquise. Le système d'acquisition et la surface ont un mouvement relatif.

Le dispositif électronique de calcul 18 est, par exemple, un ordinateur, un calculateur, un module de calcul, au moins un composant logique programmable tel que des FPGA (de l'anglais *Field-Programmable Gate Array*) ou encore au moins un circuit intégré dédié tel que des ASIC (de l'anglais *Application-Specific Integrated Circuit*).

Le dispositif électronique de calcul 18 est, par exemple, relié au dispositif optique 14 et au dispositif d'éclairage 15.

Le dispositif électronique de calcul 18 est apte à allumer ou éteindre chacune des sources de lumière 16 indépendamment les unes des autres.

Le dispositif électronique de calcul 18 est, en outre, prévu pour déclencher l'acquisition d'au moins une image de la surface par le dispositif optique 14.

Il est ainsi configuré pour entraîner l'acquisition d'une pluralité d'images de la surface par le dispositif optique 14, chaque image étant acquise selon la direction optique O donnée et avec une unique source de lumière ou une combinaison définie de sources uniques allumée différente pour chaque image.

Pour chaque point de la surface, le dispositif électronique de calcul 18 est configuré pour calculer à partir des images acquises une pluralité de paramètres, les paramètres comprenant des coefficients d'une équation caractérisant la réponse dudit point de la surface en fonction de la direction d'éclairage et d'une direction d'observation, puis à déduire des paramètres calculés si la surface présente un défaut audit point.

Ce dernier point est détaillé ci-après en relation avec le procédé de détection d'un défaut.

Un procédé de détection d'un défaut dans une surface va maintenant être décrit en regard de la figure 2.

Le procédé est ici mis en oeuvre par le dispositif décrit précédemment, plus particulièrement grâce au dispositif électronique de calcul 18.

Le procédé comprend les étapes suivantes :
- acquisition 100,
- calcul de paramètres 102, et
- déduction de la présence d'un défaut 104.

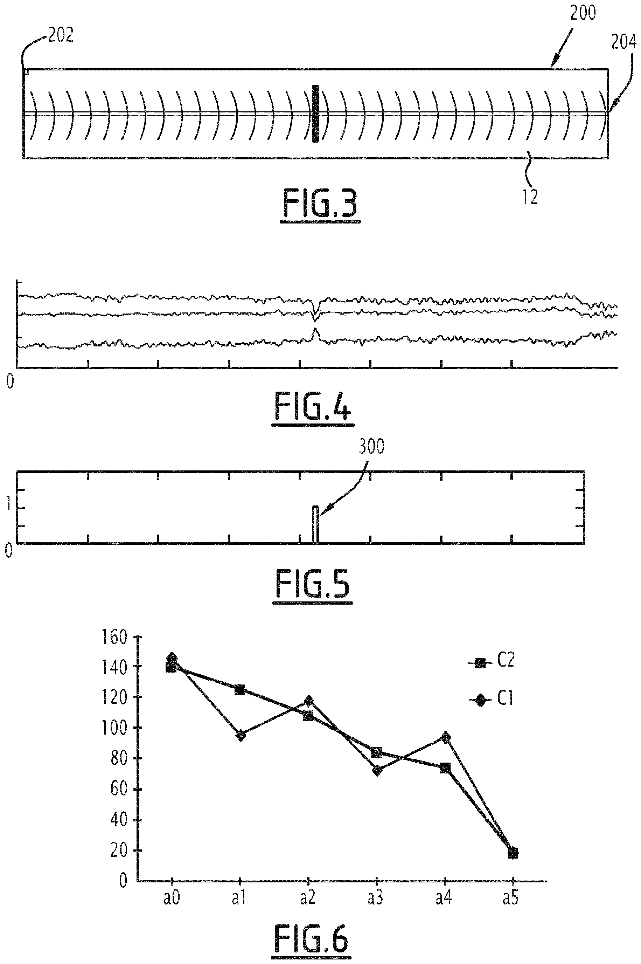

Pendant l'acquisition 100, une pluralité d'images 200 de la surface est acquise par le dispositif optique 14. Une telle image est représentée à la figure 3.

Chaque image 200 est acquise avec un éclairage de la surface 12 selon une direction d'éclairage donnée E, E' pour chaque point de la surface et avec l'axe optique du dispositif optique 14 selon une direction optique O donnée.

Les images 200 sont acquises avec différentes directions d'éclairage E, E' ou combinaisons de directions d'éclairage.

En variante, les images 200 sont acquises avec différentes directions optiques O.

Alternativement, les images 200 sont acquises avec différentes directions d'éclairage E, E' ou combinaisons de directions d'éclairage et avec différentes directions optiques O.

Dans le mode de réalisation représenté, les directions d'éclairage E, E' diffèrent pour chaque image acquise et la direction optique O est invariable et sensiblement perpendiculaire à la surface 12.

Pour chaque image acquise, une unique source de lumière ou une combinaison définie de sources uniques 16 du dispositif d'éclairage est allumée, l'unique source de lumière ou la combinaison étant différente pour chaque image acquise.

L'ensemble des sources de lumière ou des combinaisons est tour à tour allumé, de sorte à acquérir une image par source de lumière ou par combinaison. En variante, certaines sources ou combinaisons ne sont pas allumées.

Puis, pendant le calcul de paramètres 102, pour chaque point 202 de la surface, c'est-à-dire ici pour chaque pixel des images acquises, une pluralité de paramètres sont calculés à partir des images acquises.

Les paramètres sont calculés à partir des coefficients d'une équation caractérisant la réponse dudit point de la surface en fonction de la direction d'éclairage E, E' et d'une direction d'observation B, B'.

Pour chaque point 202 de la surface 200, le calcul de paramètres 102 comprend ici les étapes suivantes :
- définition d'une grandeur 106,
- choix de modèle 108, et
- calcul de coefficients 110.

Lors de la définition d'une grandeur 106, une grandeur évoluant en fonction des images acquises est définie.

Par exemple, la grandeur est ici l'intensité de gris du point de la surface, l'intensité de gris étant variable selon les images acquises.

En parallèle un modèle représentant l'évolution de la grandeur est choisi 108. Le modèle dépend de la ou les direction(s) d'éclairage E, E' et/ou de la direction d'observation B, B'. Le modèle comprend des coefficients.

Ici le modèle dépend uniquement de la direction d'éclairage. Il a, par exemple, la forme suivante : *G* (*E*) = *a*₀ × *Dᵤ*² + *a*₁ × *Dᵥ*² + *a*₂ × *Dᵤ* × *Dᵥ* + *a*₃ × *Dᵤ* + *a*₄ × *Dᵥ* + *a*₅, avec G la grandeur, E la direction d'éclairage, a₀, a₁, a₂, a₃, a₄ et a₅ les coefficients et D, et Dᵥ étant des coordonnées du vecteur reliant la source d'éclairage au point de la surface.

Les coefficients a₀, a₁, a₂, a₃, a₄ et a₅ sont ici indéterminés.

Puis, lors du calcul des coefficients 110, une application de la grandeur sur le modèle est réalisée de sorte à calculer des valeurs de a₀, a₁, a₂, a₃, a₄ et a₅.

Les paramètres sont ici égaux aux coefficients a₀, a₁, a₂, a₃, a₄ et a₅ ainsi calculés.

Pour chaque point de la surface, la même grandeur et le même modèle sont définis. Ainsi pour chaque point de la surface, on obtient des paramètres a₀, a₁, a₂, a₃, a₄ et a₅. On obtient, par exemple, une cartographie de la surface représentant les valeurs des paramètres pour chaque point de la surface.

Sur la figure 4, est représentée l'évolution de trois paramètres le long de la ligne 204 de points de la surface représentée à la figure 3.

En variante, les paramètres sont d'autres valeurs calculées à partir des coefficients.

Lors de la déduction de la présence de défaut 104, il est déduit à partir des paramètres calculés si la surface présente un défaut audit point.

Sur la figure 6, par exemple, les paramètres sont représentés avec la courbe C₁ en un point ne présentant pas de défaut et avec la courbe C₂ en un point présentant un défaut.

Le résultat obtenu à l'étape 104 pour chaque point est, par exemple, un booléen représentant binairement si un défaut est détecté audit point.

Sur la figure 5, est représenté le booléen le long de la ligne 204 : si le booléen est égal à 0, aucun défaut n'est détecté ; si le booléen est égal à 1, un défaut est détecté.

Ainsi, sur la figure 5, un unique défaut 300 est détecté et s'étend sur plusieurs points adjacents.

Un ou plusieurs critères sont utilisés pour déduire la présence d'un défaut à partir des paramètres. Ces critères sont décrits ci-après et sont utilisés seul ou en combinaison afin de détecter un défaut. Par exemple, un défaut est détecté quand au moins deux des critères sont validés.

Un premier critère est qu'un défaut est détecté audit point lorsqu'au moins un paramètre audit point n'est pas compris dans un intervalle.

Plus particulièrement l'intervalle est centré autour de la valeur moyenne dudit paramètre sur l'ensemble des points de la surface.

En variante, l'intervalle est un intervalle donné.

Alternativement, un défaut est détecté audit point lorsqu'au moins un nombre donné de paramètres audit point ne sont pas compris dans un intervalle respectif.

Un deuxième critère est qu'un défaut est détecté audit point lorsqu'au moins un paramètre audit point diffère d'une valeur choisie comme seuil de détection par rapport au bruit de fond dudit paramètre en un point adjacent, la surface ne présentant pas de défaut au point adjacent.

Ainsi, de proche en proche, la surface est analysée.

Il convient alors de définir au moins un premier point de la surface pour lequel un défaut n'est pas présent.

En variante, le dispositif électronique de calcul 18 considère qu'un endroit de la surface est dépourvu de défaut et, de proche en proche, détecte des défauts dans la surface. Si le résultat est jugé non acceptable, par exemple, si une majorité de la surface est détectée comme présentant un défaut, alors l'étape est réitérée en considérant qu'un autre endroit, différent de précédemment, est dépourvu de défaut.

Un troisième critère repose sur la géométrie d'un signal.

Le signal est ici l'évolution d'un ou plusieurs paramètres sur un ensemble de points défini. Les points de l'ensemble sont ici adjacents. L'ensemble de points est, par exemple, une zone centrée sur un point central.

On définit des motifs correspondant à des cas dans lesquels un défaut est détecté et/ou dans lesquels aucun défaut n'est détecté. La forme du signal est comparée aux motifs, de sorte à décider si un défaut est détecté. Le défaut est détecté au point central, dans une zone comprenant le point central et incluse dans l'ensemble de points ou dans l'ensemble de points.

Ainsi, pour chaque point de la surface, il est déduit des paramètres si un défaut est présent ou non.

Cela est, par exemple, représentable sur une cartographie binaire de la surface afin de visualiser facilement les défauts.

En variante, les sources de lumière 16 n'ont pas une intensité lumineuse identique. Une calibration du dispositif est alors réalisée.

Dans un autre mode de réalisation, la direction optique du dispositif optique varie, la surface et une source d'éclairage restant fixe entre chaque image acquise. Alternativement, la direction optique et la direction d'éclairage sont mobiles par rapport à la surface.

En variante, le calcul des paramètres 102 reposent sur un autre modèle mathématique tel que la fonction de distribution de la réflectance bidirectionnelle (ou BRDF) ou la décomposition modale discrète (ou DMD) ou encore le mappage polynomial des textures (ou PTM).

La déduction directe à partir de paramètres calculés à partir d'images acquises permet notamment de s'affranchir de la susceptibilité à la présence de défaut variant selon les opérateurs. Le procédé permet ainsi d'obtenir un résultat unique et objectif. Ainsi, le procédé est simplifié et sûr.

## Revendications

1. Procédé de détection d'un défaut sur une surface (12), le procédé comprenant les étapes suivantes :
- acquisition (100) d'une pluralité d'images (200) de la surface (12) par un dispositif optique (14) ayant un axe optique, chaque image (200) étant acquise avec un éclairage de la surface selon une direction d'éclairage (E, E') donnée pour chaque point de la surface (12) et avec l'axe optique du dispositif optique selon une direction optique (O) donnée, les images (200) étant acquises avec différentes directions d'éclairage (E, E') ou différentes combinaisons de directions d'éclairage et/ou avec différentes directions optiques (O) ;
- pour chaque point (202) de la surface (200), calcul (102) à partir des images (200) acquises d'une pluralité de paramètres, les paramètres comprenant des coefficients d'une équation caractérisant la réponse dudit point (202) de la surface en fonction de la direction d'éclairage (E, E') et d'une direction d'observation (B, B') ;
- déduction (104) des paramètres calculés si la surface (12) présente un défaut audit point (202), **caractérisé en ce que**
un défaut étant détecté audit point (202) lorsqu'au moins un paramètre audit point diffère d'une valeur choisie comme seuil de détection par rapport au bruit de fond dudit paramètre en un point adjacent, la surface (12) ne présentant pas de défaut au point adjacent.

2. Procédé de détection selon la revendication 1, **caractérisé en ce que** la direction optique (O) est la même pour la pluralité d'images (200).

3. Procédé de détection selon la revendication 2, **caractérisé en ce que** la direction optique (O) est sensiblement perpendiculaire à la surface (12).

4. Procédé de détection selon l'une quelconque des revendications précédentes, **caractérisé en ce que** l'éclairage est réalisé par un dispositif d'éclairage (15), le dispositif d'éclairage (15) comprenant un premier nombre de sources de lumière (16), le premier nombre étant supérieur à six, chaque source de lumière (16) ayant une direction d'éclairage différente (E, E'), pour chaque image acquise, une unique source de lumière ou une combinaison de sources définie (16) étant allumée, l'unique source de lumière ou combinaison (16) étant différente pour chaque image (200) acquise.

5. Procédé de détection selon la revendication 4, **caractérisé en ce que** les sources de lumière (16) ont une intensité lumineuse identique.

6. Procédé de détection selon la revendication 4 ou 5, **caractérisée en ce que** les sources de lumière (16) sont disposées selon une demi-sphère (20) entourant la surface (12).

7. Procédé de détection selon l'une quelconque des revendications 4 à 6, **caractérisée en ce que** le dispositif d'éclairage (15) comprend une ou plusieurs sources de lumière étant apte(s) à se déplacer en un premier nombre de positions par rapport à la surface.

8. Procédé de détection selon l'une quelconque des revendications précédentes, **caractérisé en ce que**, pour chaque point de la surface, le calcul des paramètres comprend les étapes suivantes :
- définition d'une grandeur (106) évoluant en fonction des images acquises,
- choix d'un modèle de la surface (108) dépendant de la ou des direction(s) d'éclairage (E, E') et/ou de la direction d'observation (B, B') pour l'évolution de la grandeur, le modèle comprenant les coefficients, et
- calcul des coefficients (110) par régression de l'évolution de la grandeur.

9. Procédé de détection selon la revendication 8, **caractérisé en ce que** la grandeur correspond à l'intensité de gris du point (202) de la surface (12), le modèle dépendant de la direction d'éclairage (E, E').

10. Procédé de détection selon l'une quelconque des revendications précédentes, **caractérisé en ce qu'**un défaut est détecté audit point (202) lorsqu'au moins un paramètre audit point n'est pas compris dans un intervalle défini.

11. Procédé de détection selon l'une quelconque des revendications précédentes, **caractérisé en ce qu'**un défaut est détecté audit point (202) lorsqu'au moins un paramètre audit point n'est pas compris dans un intervalle centré autour de la valeur moyenne dudit paramètre sur l'ensemble des points de la surface (12).

## Patentansprüche

1. Erkennungsverfahren eines Defekts auf einer Oberfläche (12), das Verfahren umfassend die folgenden Schritte:
- Erfassen (100) einer Vielzahl von Bildern (200) der Oberfläche (12) durch eine optische Vorrichtung (14), die eine optische Achse aufweist, wobei jedes Bild (200) mit einer Beleuchtung der Oberfläche gemäß einer gegebenen Beleuchtungsrichtung (E, E') für jeden Punkt auf der Oberfläche (12) und mit der optischen Achse der optischen Vorrichtung in einer gegebenen optischen Richtung (O) erfasst wird, wobei die Bilder (200) mit verschiedenen Beleuchtungsrichtungen (E, E') oder verschiedenen Kombinationen von Beleuchtungsrichtungen und/oder mit verschiedenen optischen Richtungen (O) erfasst werden;
- für jeden Punkt (202) auf der Oberfläche (200), Berechnen (102) anhand der erfassten Bildern (200) einer Vielzahl von Parametern, die Parameter umfassend Koeffizienten einer Gleichung, die die Reaktion des Punkts (202) auf der Oberfläche abhängig von der Beleuchtungsrichtung (E, E') und einer Beobachtungsrichtung (B, B') charakterisiert;
- Abziehen (104) von den berechneten Parametern, wenn die Oberfläche (12) an dem Punkt (202) einen Fehler aufweist, **dadurch gekennzeichnet, dass**
ein Fehler an dem Punkt (202) erkannt wird, wenn mindestens ein Parameter an dem Punkt von einem Wert abweicht, der als Erkennungsschwellenwert in Bezug auf das Hintergrundrauschen des genannten Parameters an einem benachbarten Punkt gewählt wird, wobei die Oberfläche (12) an dem benachbarten Punkt keinen Defekt aufweist.

2. Erkennungsverfahren nach Anspruch 1, **dadurch gekennzeichnet, dass** die optische Richtung (O) für die Vielzahl von Bildern (200) gleich ist.

3. Erkennungsverfahren nach Anspruch 2, **dadurch gekennzeichnet, dass** die optische Richtung (O) im Wesentlichen senkrecht zu der Oberfläche (12) ist.

4. Erkennungsverfahren nach einem der vorhergehenden Ansprüche, **dadurch gekennzeichnet, dass** die Beleuchtung durch eine Beleuchtungsvorrichtung (15), durchgeführt wird, die Beleuchtungsvorrichtung (15) umfassend eine erste Anzahl von Lichtquellen (16) umfasst, wobei die erste Anzahl größer ist als sechs, wobei jede Lichtquelle (16) eine verschiedene Beleuchtungsrichtung (E, E') aufweist, wobei für jedes erfasste Bild eine einzelne Lichtquelle oder eine definierte Kombination von Lichtquellen (16) eingeschaltet wird, wobei die einzelne Lichtquelle oder Kombination (16) für jedes erfasste Bild (200) verschieden ist.

5. Erkennungsverfahren nach Anspruch 4, **dadurch gekennzeichnet, dass** die Lichtquellen (16) eine identische Lichtintensität aufweisen.

6. Erkennungsverfahren nach Anspruch 4 oder 5, **dadurch gekennzeichnet, dass** die Lichtquellen (16) entlang einer Halbkugel (20) angeordnet sind, die die Oberfläche (12) umgibt.

7. Erkennungsverfahren nach einem der Ansprüche 4 bis 6, **dadurch gekennzeichnet, dass** die Beleuchtungsvorrichtung (15) eine oder mehrere Lichtquellen umfasst, die geeignet sind, um sich in einer ersten Anzahl von Positionen in Bezug auf die Oberfläche zu bewegen.

8. Erkennungsverfahren nach einem der vorherigen Ansprüche, **dadurch gekennzeichnet, dass** das Berechnen der Parameter für jeden Punkt der Oberfläche die folgenden Schritte umfasst:
- Definieren einer Größe (106), die sich abhängig von den erfassten Bildern entwickelt,
- Auswählen eines Modells der Oberfläche (108) abhängig von der oder den Beleuchtungsrichtung(en) (E, E') und/oder der Beobachtungsrichtung (B, B') für die Entwicklung der Größe, das Modell umfassend die Koeffizienten, und
- Berechnen der Koeffizienten (110) durch Regression der Entwicklung der Größe.

9. Erkennungsverfahren nach Anspruch 8, **dadurch gekennzeichnet, dass** die Größe der Graustufenintensität des Punkts (202) auf der Oberfläche (12) entspricht, wobei das Muster von der Beleuchtungsrichtung (E, E') abhängt.

10. Erkennungsverfahren nach einem der vorherigen Ansprüche, **dadurch gekennzeichnet, dass** ein Defekt an dem Punkt (202) erkannt wird, wenn mindestens ein Parameter an dem Punkt nicht in einem definierten Intervall liegt.

11. Erkennungsverfahren nach einem der vorherigen Ansprüche, **dadurch gekennzeichnet, dass** ein Defekt an dem Punkt (202) erkannt wird, wenn mindestens ein Parameter an dem Punkt nicht in einem Intervall liegt, das um den Mittelwert des Parameters über alle Punkte auf der Oberfläche (12) zentriert ist.

## Claims

1. A method for detecting a defect on a surface (12), the method including the following steps:
- acquiring (100) a plurality of images (200) of the surface (12) using an optical device (14) having an optical axis, each image (200) being acquired with a lighting of the surface along a lighting direction (E, E') given for each point of the surface (12) and with the optical axis of the optical device along a given optical direction (O), the images (200) being acquired with different lighting directions (E, E') or different combinations of lighting directions and/or with different optical directions (O);
- for each point (202) of the surface (200), calculating (102), from acquired images (200), a plurality of parameters, the parameters including coefficients of an equation characterizing the response of said point (202) of the surface as a function of the lighting direction (E, E') and an observation direction (B, B');
- deducing (104) from the calculated parameters (12) whether the surface has a defect at said point (202), **characterized in that** a defect being detected at said point (202) when at least one parameter at said point differs from a value chosen as detection threshold relative to the background noise of said parameter at an adjacent point, the surface (12) not having a defect at the adjacent point.

2. The detection method according to claim 1, **characterized in that** the optical direction (O) is the same for the plurality of images (200).

3. The detection method according to claim 2, **characterized in that** the optical direction (O) is substantially perpendicular to the surface (12).

4. The detection method according to any one of the preceding claims, **characterized in that** the lighting is done by a lighting device (15), the lighting device (15) including a first number of light sources (16), the first number being greater than six, each light source (16) having a different lighting direction (E, E'), for each acquired image, a single light source or a defined combination of sources (16) being illuminated, the single light source or combination (16) being different for each acquired image (200).

5. The detection method according to claim 4, **characterized in that** the light sources (16) have an identical light intensity.

6. The detection method according to claim 4 or 5, **characterized in that** the light sources (16) are arranged in a half-sphere (20) surrounding the surface (12).

7. The detection method according to any one of claims 4 to 6, **characterized in that** the lighting device (15) includes one or several light sources that are capable of moving in a first number of positions relative to the surface.

8. The detection method according to any one of the preceding claims, **characterized in that**, for each point of the surface, the calculation of the parameters includes the following steps:
- defining a quantity (106) evolving as a function of the acquired images,
- choosing a model of the surface (108) depending on the lighting direction(s) (E, E') and/or the observation direction (B, B') for the evolution of the quantity, the model including the coefficients, and
- calculating the coefficients (110) by regression of the evolution of the quantity.

9. The detection method according to claim 8, **characterized in that** the quantity corresponds to the gray intensity of the point (202) of the surface (12), the model depending on the lighting direction (E, E').

10. The detection method according to any one of the preceding claims, **characterized in that** a defect is detected at said point (202) when at least one parameter at said point is not comprised in a defined interval.

11. The detection method according to any one of the preceding claims, **characterized in that** a defect is detected at said point (202) when at least one parameter at said point is not comprised in an interval centered around the mean value of said parameter on the set of points of the surface (12).
